# EUROPEAN PATENT APPLICATION

(11) **EP 4 589 896 A1**
(43) Date of publication of application: **23.07.2025**
(21) Application number: 22963743.4
(22) Date of filing: 31.10.2022
(51) Int. Cl.: H04L 27/00

(54) **COMMUNICATION METHOD AND RELATED APPARATUS**

(71) Applicant: Huawei Technologies Co., Ltd., Shenzhen, Guangdong 518129 (CN)
(72) Inventor: LIU, Peng, Shenzhen, Guangdong 518129 (CN); SUN, Li, Shenzhen, Guangdong 518129 (CN)
(74) Representative: MERH-IP Matias Erny Reichl Hoffmann Patentanwälte PartG mbB
(86) International application number: PCT/CN2022/128687
(87) International publication number: WO 2024/092423

(57) **Abstract**

This application provides a communication method and a related apparatus. The method includes: A first terminal device receives a first transmission parameter and a first reference signal from a network device, where the first transmission parameter is a transmission parameter used for data transmission between the network device and a second terminal device, and the first terminal device and the second terminal device are different terminal devices; and demodulates the first reference signal based on the first transmission parameter. According to the technical solutions provided in this application, accuracy of determining a bit error rate can be improved, thereby resolving a problem that accuracy of calculating the bit error rate based on model simulation or theory cannot be ensured in an actual wireless environment with a high dynamic characteristic and a scenario diversity.

## Description

### TECHNICAL FIELD

This application relates to the field of wireless communication technologies, and in particular, to a communication method and a related apparatus.

### BACKGROUND

In a wireless communication system, secure transmission is a basic guarantee for communication. Secure transmission may be implemented based on a key, for example, may be implemented through symmetric encryption and asymmetric encryption. Key maintenance and management need complex protocol support, resulting in extra communication overheads and a delay, and therefore cannot adapt to a high dynamic characteristic of a future communication network. In addition, in a current wireless communication protocol, control signaling at a physical layer and a medium access control (medium access control, MAC) layer is transmitted before key agreement, and therefore a key-based secure communication means cannot be used. Therefore, a keyless secure transmission method may be used to prevent communication transmission from being attacked by a distributed denial of service attack (distributed-denial of-service, DDoS), tampering, listening, or the like.

In the keyless secure transmission method, a bit error difference between a legal link and an illegal link needs to be established. That is, a packet error rate (packet error rate, PER) of an unauthorized user needs to be greater than a specific threshold. Currently, the PER may be estimated based on a model. For example, the PER may be calculated, through simulation and theory, based on a radio propagation model and a receiver reference model. However, in an actual wireless system, accuracy of a PER estimated based on a model cannot be ensured due to factors such as a high dynamic characteristic and a scenario diversity of a wireless environment. Therefore, how to improve PER determining accuracy is an urgent problem to be resolved.

### SUMMARY

Embodiments of this application provide a communication method and a related apparatus, to improve accuracy of determining a bit error rate, thereby resolving a problem that accuracy of calculating the bit error rate based on model simulation or theory cannot be ensured in an actual wireless environment with a high dynamic characteristic and a scenario diversity.

According to a first aspect, this application provides a communication method. The method may be applied to a first terminal device, an apparatus (for example, a chip, a chip system, or a circuit) in a first terminal device, or an apparatus that can be used in combination with a first terminal device. An example in which the method is applied to the first terminal device is used below for description. The method may include: the first terminal device receives a first transmission parameter and a first reference signal from a network device, where the first transmission parameter is a transmission parameter used for data transmission between the network device and a second terminal device, and the first terminal device and the second terminal device are different terminal devices; and demodulating the first reference signal based on the first transmission parameter.

In the solution provided in this application, the network device sends the first transmission parameter to the first terminal device. The first transmission parameter is the transmission parameter used for data transmission between the network device and the second terminal device. The first terminal device and the second terminal device are different terminal devices, and the first terminal device demodulates the first reference signal based on the first transmission parameter. The network device shares and sends a transmission parameter of the second terminal device to the first terminal device, so that the first terminal device can demodulate the first reference signal, to obtain a PER of the first terminal device. It may be understood that the first terminal device serves as an "EVE" (eavesdropper) of the second terminal device, and assists in collecting statistics on a PER of the "EVE", so that accuracy of determining a bit error rate can be improved, thereby resolving a problem that accuracy of calculating the bit error rate based on model simulation or theory cannot be ensured in an actual wireless environment with a high dynamic characteristic and a scenario diversity.

In a possible implementation, the communication method further includes: the first terminal device sends the PER to the network device, where the PER is determined by demodulating the first reference signal based on the first transmission parameter.

In the solution provided in this application, the first terminal device may determine the PER, and report the PER to the network device, so that the network device determines the PER of the first terminal device.

In a possible implementation, the communication method further includes: the first terminal device sends indication information to the network device, where the indication information indicates whether the first reference signal is successfully demodulated based on the first transmission parameter.

In the solution provided in this application, after demodulating the first reference signal based on the first transmission parameter, the first terminal device can report a demodulation result to the network device, and the network device determines the PER based on the demodulation result.

In a possible implementation, the communication method further includes: the first terminal device sends request information to the network device, where the request information is used to request the network device to send the first transmission parameter.

The first transmission parameter may be requested to be sent through sending the request information by the first terminal device to the network device, or may be voluntarily sent by the network device to the first terminal device. Optionally, if the network device voluntarily sends the first transmission parameter to the first terminal device, the network device may first notify the first terminal device before sending the first transmission parameter to the first terminal device, so that the first terminal device can receive the first transmission parameter in a timely manner.

In a possible implementation, the first reference signal carries first transmission information, and the first transmission information is modulated based on the first transmission parameter.

According to a second aspect, this application provides a communication method. The method may be applied to a first terminal device, an apparatus (for example, a chip, a chip system, or a circuit) in a first terminal device, or an apparatus that can be used in combination with a first terminal device. An example in which the method is applied to the first terminal device is used below for description. The method may include: a network device sends a first transmission parameter and a first reference signal to a first terminal device, where the first transmission parameter is used for demodulating the first reference signal, the first transmission parameter is a transmission parameter used between the network device and a second terminal device, and the first terminal device and the second terminal device are different terminal devices.

In the solution provided in this application, the network device sends the first transmission parameter to the first terminal device. The first transmission parameter is the transmission parameter used for data transmission between the network device and the second terminal device. The first terminal device and the second terminal device are different terminal devices, and the first terminal device demodulates the first reference signal based on the first transmission parameter. The network device shares and sends a transmission parameter of the second terminal device to the first terminal device, so that the first terminal device can demodulate the first reference signal, to obtain a PER of the first terminal device. It may be understood that the first terminal device serves as an "EVE" (eavesdropper) of the second terminal device, and assists in collecting statistics on a PER of the "EVE", so that accuracy of determining a bit error rate can be improved, thereby resolving a problem that accuracy of calculating the bit error rate based on model simulation or theory cannot be ensured in an actual wireless environment with a high dynamic characteristic and a scenario diversity.

It should be understood that an execution body of the second aspect is the network device, and specific content of the second aspect corresponds to the content of the first aspect. For corresponding features of the second aspect and beneficial effects achieved by the second aspect, refer to the descriptions of the first aspect. To avoid repetition, detailed descriptions are properly omitted herein.

In a possible implementation, the communication method further includes: the network device receives the PER from the first terminal device, where the PER is determined by the first terminal device by demodulating the first reference signal based on the first transmission parameter.

In a possible implementation, the communication method further includes: the network device receives indication information from the first terminal device, where the indication information indicates whether the first terminal device successfully demodulates the first reference signal based on the first transmission parameter.

In a possible implementation, the communication method further includes: the network device determines a first area of the second terminal device, where the first terminal device is a terminal device with a lowest PER outside the first area.

In the solution provided in this application, it is assumed that the first terminal device is an "EVE" of the second terminal device. Therefore, it is particularly important for the network device to determine the first terminal device. According to this embodiment, the network device can determine the first terminal device. The first terminal device serves as the "EVE" of the second terminal device, and assists in collecting statistics on a PER of the "EVE", so that accuracy of determining the bit error rate can be improved, thereby resolving the problem that accuracy of calculating the bit error rate based on model simulation or theory cannot be ensured in an actual wireless environment with a high dynamic characteristic and a scenario diversity.

In a possible implementation, the communication method further includes: the network device receives request information from the first terminal device, where the request information is used to request the network device to send the first transmission parameter.

In a possible implementation, the first reference signal carries first transmission information, and the first transmission information is modulated based on the first transmission parameter.

According to a third aspect, an embodiment of this application provides a communication apparatus. The communication apparatus may be used in a first terminal device, or an apparatus (for example, a chip, a chip system, or a circuit) in a first terminal device, or a logical module or software that can implement all or some functions of a first terminal device. The communication apparatus has a function of implementing the behavior in the method example in the first aspect. The function may be implemented by hardware, or may be implemented by hardware executing corresponding software. The hardware or the software includes one or more modules corresponding to the foregoing function. For beneficial effects, refer to descriptions of the first aspect. Details are not described herein again.

According to a fourth aspect, an embodiment of this application provides a communication apparatus. The communication apparatus may be used in a network device, or an apparatus (for example, a chip, a chip system, or a circuit) in a network device, or a logical module or software that can implement all or some functions of a network device. The communication apparatus has a function of implementing the behavior in the method example in the second aspect. The function may be implemented by hardware, or may be implemented by hardware executing corresponding software. The hardware or the software includes one or more modules corresponding to the foregoing function. For beneficial effects, refer to descriptions of the second aspect. Details are not described herein again.

According to a fifth aspect, a communication apparatus is provided. The communication apparatus may be the first terminal device in the foregoing method embodiments, or an apparatus (for example, a chip, a chip system, or a circuit) disposed in the first terminal device. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the first aspect or any one of the implementations of the first aspect and that is performed by the first terminal device or the apparatus in the first terminal device in the foregoing method embodiments.

According to a sixth aspect, a communication apparatus is provided. The communication apparatus may be the network device in the foregoing method embodiments, or an apparatus (for example, a chip, a chip system, or a circuit) disposed in the network device. The apparatus may include a processor, a memory, an input interface, and an output interface. The input interface is configured to receive information from a communication apparatus other than the communication apparatus. The output interface is configured to output information to a communication apparatus other than the communication apparatus. The processor is coupled to the memory. The memory is configured to store a program or instructions. When the program or the instructions are executed by the processor, the communication apparatus is enabled to perform the communication method that is provided in the second aspect or any one of the implementations of the second aspect and that is performed by the network device or the apparatus in the network device in the foregoing method embodiments.

According to a seventh aspect, this application provides a computer-readable storage medium. The computer-readable storage medium stores computer instructions. When the computer program or the computer instructions are run, a computer is enabled to perform the method according to the first aspect and any one the possible implementations of the first aspect, or the method according to the second aspect and any one of the possible implementations of the second aspect.

According to an eighth aspect, this application provides a computer program product including executable instructions. When the computer program product runs on a computer, the computer is enabled to perform the method according to the first aspect or any one of the possible implementations of the first aspect, or the method according to the second aspect or any one of the possible implementations of the second aspect.

According to a ninth aspect, this application provides a communication apparatus. The communication apparatus includes a processor, configured to implement the method according to the first aspect and any one of the possible implementations of the first aspect, or the method according to the second aspect and any one of the possible implementations of the second aspect. In a possible implementation, the communication apparatus may further include a memory, configured to store program instructions and/or data. The communication apparatus may be a chip system. The chip system may include a chip, or may include a chip and another discrete device.

According to a tenth aspect, this application provides a communication system. The communication system includes at least one first terminal device, at least one second terminal device, and at least one network device. When the at least one first terminal device, the at least one second terminal device, and the at least one network device run in the communication system, the communication system is configured to perform any communication method according to the first aspect and the second aspect.

### BRIEF DESCRIPTION OF DRAWINGS

To describe embodiments of this application more clearly, the following briefly describes accompanying drawings used in embodiments. It is clear that a person of ordinary skill in the art can further obtain other drawings based on these accompanying drawings without creative efforts.
FIG. 1 is a diagram of a network architecture of a mobile communication system according to an embodiment of this application;
FIG. 2 is a diagram of interaction in a communication method according to an embodiment of this application;
FIG. 3 is a diagram of interaction in another communication method according to an embodiment of this application;
FIG. 4 is a diagram of interaction in still another communication method according to an embodiment of this application;
FIG. 5 is a diagram of interaction in yet another communication method according to an embodiment of this application;
FIG. 6 is a diagram of a scenario in which a network device determines a first terminal device according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of still another communication apparatus according to an embodiment of this application; and
FIG. 10 is a diagram of a structure of a terminal device according to an embodiment of this application.

### DESCRIPTION OF EMBODIMENTS

The following describes the technical solutions in embodiments of this application with reference to accompanying drawings in embodiments of this application. The terms "system" and "network" may be used interchangeably in embodiments of this application. Unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", and "have", and variants thereof all mean "include but are not limited to", unless otherwise specifically emphasized in another manner.

The objectives, technical solutions, and beneficial effects of this application are further described in detail in the following specific implementations. It should be understood that the following descriptions are merely specific implementations of this application, but are not intended to limit the protection scope of this application. Any modification, equivalent replacement, or improvement made based on technical solutions of this application shall fall within the protection scope of this application.

The following first describes technical terms that may appear in embodiments of this application. Terms used in implementations of this application are only used to explain specific embodiments of this application, but are not intended to limit this application. In embodiments of this application, unless otherwise specified or there is a logic conflict, terms and/or descriptions in different embodiments are consistent and may be mutually referenced, and technical features in different embodiments may be combined to form a new embodiment based on internal logical relationships of different embodiments.

### (1) Packet error rate

The packet error rate is also referred to as a packet error rate (packet error rate, PER), which is a ratio of a quantity of packets that are not correctly received by a receiver to a quantity of packets sent by a sender.

### (2) Positioning

An NR positioning method may include the following:
Downlink time difference of arrival (downlink time difference of arrival, DL-TDOA): A new reference signal, that is, a positioning reference signal (positioning reference signal, PRS), is introduced in the R16 version, and may be used by a terminal device to perform downlink reference signal time difference (downlink reference signal time difference, DL RSTD) measurement on the PRS of each network device, and report these measurement results to a location server.

Uplink time difference of arrival (uplink time difference of arrival, UL-TDOA): An enhanced R16 sounding reference signal (sounding reference signal, SRS), allows each network device to measure uplink relative time of arrival (uplink relative time of arrival, UL-RTOA), and report measurement results to a location server.

Downlink angle-of-departure (downlink angle-of-departure, DL-AoD): A terminal device measures a downlink reference signal received power (downlink reference signal receiving power, DL RSRP) of each beam/network device. Measurement reports are used to determine an AoD based on a beam location of the terminal device of each network device. Then, a location server may estimate a location of the terminal device based on the AoD.

Uplink angle of arrival (uplink angle of arrival, UL-AoA): A network device measures an angle of arrival based on a beam on which a terminal device is located. A measurement report is sent to a location server.

Multi-cell round trip time (round trip time, RTT): A network device and a terminal device measure an Rx-Tx time difference of a signal of each cell. Measurement reports from the terminal device and the network device are sent to a location server, to determine the round trip time of each cell and deduce a location of the terminal device.

Enhanced cell ID (enhanced cell ID, E-CID): is based on a radio resource management (radio resource management, RRM) measurement (for example, a DL RSRP) of each network device at a location of a terminal device. A measurement report is sent to a location server.

It should be understood that the technical solution in embodiments of this application may be applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solution in embodiments of this application may be further applied to another communication system, for example, a public land mobile network (public land mobile network, PLMN) system, a long term evolution advanced (LTE advanced, LTE-A) system, a 5^{th} generation mobile communication (the 5th generation, 5G) system, an NR system, a machine to machine (machine to machine, M2M) system, or another future evolved communication system. This is not limited in embodiments of this application. The technical solution provided in embodiments of this application may be further applied to another communication system, as long as an entity in the communication system can send control information and send (and/or receive) a transport block, and another entity in the communication system can receive control information and receive (and/or send) a transport block.

It should be understood that embodiments of this application are applicable to a sensing (sensing) system, applicable to a system that complies with the IEEE 802.11 system standard, for example, 802.11bf, 802.11a/b/g, 802.11n, 802.11ac, 802.11ax, or a next generation thereof, for example, 802.11be, Wi-Fi 7, or EHT, or a further next generation thereof, for example, a wireless local area network system that complies with 802.11 series protocols, for example, Wi-Fi 8, UHR, or Wi-Fi AI, or a wireless personal area network system based on ultra-wideband UWB, or applicable to a wireless local area network (wireless local area network, WLAN) scenario. Alternatively, embodiments of this application are applicable to a wireless local area network system, for example, an internet of things (internet of things, IoT) network or a vehicle to X (vehicle to X, V2X) network.

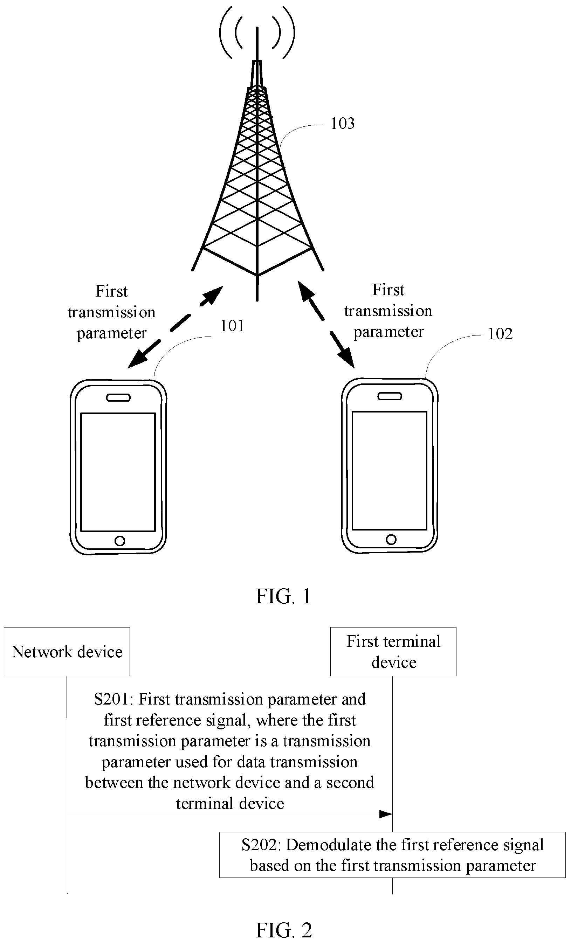

FIG. 1 is a diagram of a network architecture of a mobile communication system according to an embodiment of this application. As shown in FIG. 1, the mobile communication system may include at least one terminal device (for example, a terminal device 101 and a terminal device 102 in FIG. 1) and a network device 103. The terminal device may be connected to the network device 103 in a wireless manner, and may access a core network device via the network device 103. The terminal device may be located at a fixed position, or may be mobile. In this application, the network device 103 may separately send a first transmission parameter to the terminal device 101 and the terminal device 102.

The terminal device is an entity configured to receive or transmit a signal on a user side. The terminal device may be deployed on land, where the deployment includes indoor or outdoor, or handheld or vehicle-mounted deployment, may be deployed on water (for example, on a ship), or may be deployed in air (for example, on aircraft, a balloon, or a satellite). The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (telemedicine), a wireless terminal device in a smart grid (smart grid), a wireless terminal in transportation safety (transportation safety), a wireless terminal device in a smart city (smart city), or a wireless terminal in a smart home (smart home), or may alternatively include user equipment (user equipment, UE) or the like.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technologies. A main technical feature of the IoT is to connect things to a network by using a communication technology, to implement an intelligent network with human-machine interconnection and thing-thing interconnection. In embodiments of this application, the IoT technology can implement massive connections, deep coverage, and terminal power saving by using, for example, a narrow band (narrow band, NB) technology.

The network device may be an entity configured to transmit or receive a signal, or may be a device configured to communicate with the terminal device. The network device may be a base station (base transceiver station, BTS) in a global system for mobile communication (global system for mobile communication, GSM) or a code division multiple access (code division multiple access, CDMA) system, may be a base station (NodeB, NB) in a wideband code division multiple access (wideband code division multiple access, WCDMA) system, may be an evolved base station (evolved NodeB, eNB or eNodeB) in an LTE system, or may be a wireless controller in a cloud radio access network (cloud radio access network, CRAN) scenario. Alternatively, the network device may be a relay station, an access point, a vehicle-mounted device, a wearable device, a network device in a 5G network, a network device in a future evolved PLMN, or the like. This is not limited in embodiments of this application. The network device may be a device in a wireless network, for example, a radio access network (radio access network, RAN) node that connects the terminal to the wireless network. Currently, some RAN nodes are used as examples: a base station, a next-generation base station (next-generation NodeB, gNB), a transmission reception point (transmission reception point, TRP), an eNB, a home base station, a baseband unit (baseband unit, BBU), or an access point (access point, AP) in a Wi-Fi system. In a network structure, the network device may include a central unit (centralized unit, CU) node, or a distributed unit (distributed unit, DU) node, or a RAN device including a CU node and a DU node.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD), a smart card and a flash memory component (for example, erasable programmable read-only memory (erasable programmable read-only memory, EPROM), a card, a stick, or a key drive)). In addition, various storage media described in this specification may represent one or more devices and/or other machine-readable media that are configured to store information. The term "machine-readable media" may include but is not limited to a radio channel, and various other media that can store, include, and/or carry instructions and/or data.

It should be noted that quantities and types of network devices and terminal devices included in the network architecture shown in FIG. 1 are merely examples, and embodiments of this application are not limited thereto. For example, more or fewer terminal devices that communicate with the network device may be included. For conciseness of description, this is not described in the figures again. In addition, in the network architecture shown in FIG. 1, although the network device and the terminal devices are shown, the application scenario may not be limited to including the network device and the terminal devices. For example, the application scenario may further include a core network node, a device configured to carry a virtualized network function, a wireless relay device, a wireless backhaul device, and the like. This is clear to a person skilled in the art, and details are not described herein.

To facilitate understanding of embodiments of this application, the following first describes a plurality of technical solutions included in current implementation of secure transmission, which are described by using examples in the following.

In a wireless communication system, secure transmission is a basic guarantee of communication. Secure transmission may be implemented based on a key, for example, may be implemented through symmetric encryption and asymmetric encryption. Key maintenance and management need complex protocol support, resulting in extra communication overheads and a delay, and therefore cannot adapt to a high dynamic characteristic of a future communication network. In addition, in a current wireless communication protocol, control signaling at a physical layer and a medium access control (medium access control, MAC) layer is transmitted before key agreement, and therefore a key-based secure communication means cannot be used. Therefore, a keyless secure transmission method may be used to prevent communication transmission from being attacked by a distributed denial of service attack (distributed denial-of-service, DDoS), tampering, listening, or the like.

In the keyless secure transmission method, a bit error difference between a legal link and an illegal link needs to be established. That is, a packet error rate (packet error rate, PER) of an unauthorized user needs to be greater than a specific threshold.

Currently, the PER may be estimated based on a model. For example, the PER may be calculated, through simulation and theory, based on a radio propagation model and a receiver reference model. However, in an actual wireless system, accuracy of a PER estimated based on a model cannot be ensured due to factors such as a high dynamic characteristic and a scenario diversity of a wireless environment. Therefore, how to improve PER determining accuracy is an urgent problem to be resolved.

Based on the problem that accuracy of an estimated PER cannot be ensured, an embodiment of this application provides a communication method. A network device sends a first transmission parameter and a first reference signal to a first terminal device. The first transmission parameter is a transmission parameter used for data transmission between the network device and a second terminal device. The first terminal device and the second terminal device are different terminal devices, and the first terminal device demodulates the first reference signal based on the first transmission parameter. In this way, accuracy of determining a bit error rate can be improved, thereby resolving a problem that accuracy of calculating the bit error rate based on model simulation or theory cannot be ensured in an actual wireless environment with a high dynamic characteristic and a scenario diversity.

This application provides a communication method. The following separately describes the communication method by using the following embodiments. It should be understood that these communication methods may be used in combination with each other.

In embodiments (for example, the following embodiments corresponding to FIG. 2 to FIG. 4) of this application, an example in which a first terminal device and a network device are used as execution bodies of interaction examples is used for illustrating the method, but the execution bodies of the interaction examples are not limited in this application. For example, the terminal device may alternatively be a chip, a chip system, or a processor that supports the first terminal device in implementing the method, or may be a logical module or software that can implement all or some functions of the first terminal device. The network device may alternatively be a chip, a chip system, or a processor that supports the network device in implementing the method, or may be a logical module or software that can implement all or some functions of the network device. Embodiments of this application are uniformly described herein, and details are not described below again.

With reference to the foregoing network architecture, the following describes a communication method provided in an embodiment of this application. FIG. 2 is a diagram of interaction in the communication method according to an embodiment of this application. As shown in FIG. 2, the communication method may include S201 and S202.

S201: A network device sends a first transmission parameter and a first reference signal to a first terminal device, where the first transmission parameter is a transmission parameter used for data transmission between the network device and a second terminal device. Correspondingly, the first terminal device receives the first transmission parameter and the first reference signal from the network device.

The first terminal device and the second terminal device are different terminal devices that communicate with the network device. The second terminal device may be understood as a first authorized user of the network device. The first terminal device may be understood as a second authorized user of the network device, and is assumed to be an "EVE" of the first authorized user.

The first transmission parameter (that is, a physical layer transmission parameter of a legal link) between the network device and the second terminal device may be shared with another terminal device, for example, shared with the first terminal device. In other words, the network device sends the first transmission parameter to the first terminal device. Optionally, when sending the first transmission parameter to the second terminal device, the network device may also send the first transmission parameter to the first terminal device. It may be understood that a sequence in which the network device sends the first transmission parameter to the first terminal device and the second terminal device may be not limited.

The first transmission parameter may include but is not limited to a scrambling manner, a modulation and coding scheme (modulation and coding scheme, MCS), a transmission time-frequency resource, and the like.

The network device may further send the first reference signal to the first terminal device. The first reference signal carries first transmission information, and the first transmission information is modulated based on the first transmission parameter. Optionally, the network device may negotiate specific content of the first transmission information with the second terminal device. In a subsequent process in which the first terminal device receives the first transmission information from the network device, the first terminal device knows the first transmission parameter, which may cause a security risk. Therefore, the first transmission information may be plaintext information that is negotiated by the network device and the second terminal device and that does not have a security risk. Alternatively, the first transmission information may be some information that is prestored by the network device and that is specifically used by the first terminal device to determine a PER.

Further, optionally, the network device may first notify the first terminal device before sending the first transmission parameter to the first terminal device, so that the first terminal device can receive the first transmission parameter in a timely manner.

S202: The first terminal device demodulates the first reference signal based on the first transmission parameter.

After receiving the first transmission parameter and the first reference signal from the network device, the first terminal device may demodulate the first reference signal based on the first transmission parameter, to obtain the first transmission information carried in the first reference signal. The first terminal device may compare original first transmission information with the first transmission information obtained by demodulating the first reference signal based on the first transmission parameter. For example, the first terminal device may perform integrity check on the two pieces of first transmission information and/or check a difference between the two pieces of first transmission information, and then determine, based on the integrity and/or the difference, whether the first reference signal is successfully demodulated based on the first transmission parameter.

Optionally, the network device may send the first reference signal to the first terminal device for a plurality of times, so that the first terminal device demodulates the first reference signal based on the first transmission parameter for a plurality of times.

In this embodiment, the network device sends the first transmission parameter to the first terminal device. The first transmission parameter is the transmission parameter used for data transmission between the network device and the second terminal device. The first terminal device and the second terminal device are different terminal devices, and the first terminal device demodulates the first reference signal based on the first transmission parameter. The network device shares and sends a transmission parameter of the second terminal device to the first terminal device, so that the first terminal device can demodulate the first reference signal, to obtain a PER of the first terminal device. It may be understood that the first terminal device serves as an "EVE" of the second terminal device, and assists in collecting statistics on a PER of the "EVE", so that accuracy of determining a bit error rate can be improved, thereby resolving a problem that accuracy of calculating the bit error rate based on model simulation or theory cannot be ensured in an actual wireless environment with a high dynamic characteristic and a scenario diversity.

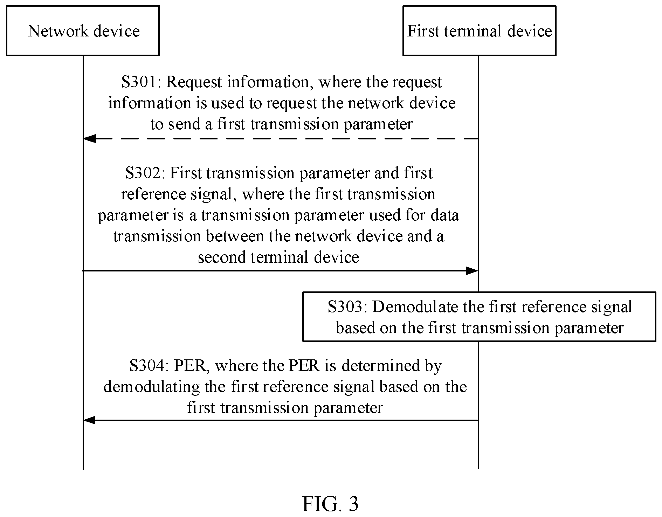

Based on FIG. 2, the following describes another communication method provided in an embodiment of this application. It should be understood that explanations of terms in different embodiments of this application may refer to each other. To avoid redundant descriptions, a same term may not be described in different embodiments. FIG. 3 is a diagram of interaction in the another communication method according to an embodiment of this application. As shown in FIG. 3, the communication method may include S301 to S304. S301 is an optional step.

S301: A first terminal device sends request information to a network device, where the request information is used to request the network device to send a first transmission parameter. Correspondingly, the network device receives the request information from the first terminal device.

The first transmission parameter may be requested to be sent through sending the request information by the first terminal device to the network device, or may be voluntarily sent by the network device to the first terminal device. Optionally, if the network device voluntarily sends the first transmission parameter to the first terminal device, the network device may first notify the first terminal device before sending the first transmission parameter to the first terminal device, so that the first terminal device can receive the first transmission parameter in a timely manner.

S302: The network device sends the first transmission parameter and a first reference signal to the first terminal device, where the first transmission parameter is a transmission parameter used for data transmission between the network device and a second terminal device. Correspondingly, the first terminal device receives the first transmission parameter and the first reference signal from the network device.

S303: The first terminal device demodulates the first reference signal based on the first transmission parameter.

It should be understood that step S302 and step S303 correspond to step S201 and step S202. For related descriptions in step S302 and step S303, refer to the descriptions in step S201 and step S202. To avoid repetition, details are not described herein again.

S304: The first terminal device sends a PER to the network device, where the PER is determined by demodulating the first reference signal based on the first transmission parameter. Correspondingly, the network device receives the PER from the first terminal device.

Steps S302 and S303 may be repeated until a specific threshold is reached. The first terminal device may collect statistics on a result of demodulating the first reference signal each time to obtain the PER. For example, the PER is obtained based on whether demodulation is successful each time. In addition, the PER may be reported to the network device, so that the network device determines the PER of the first terminal device. It may be understood that the threshold may be configured by the network device through radio resource control (radio resource control, RRC), or may be predefined in a protocol. This is not limited in this application.

Optionally, after determining the PER of the first terminal device, the network device may stop sending the first reference signal to the first terminal device.

In this embodiment, the network device sends the first transmission parameter to the first terminal device. The first transmission parameter is the transmission parameter used for data transmission between the network device and the second terminal device. The first terminal device and the second terminal device are different terminal devices, and the first terminal device demodulates the first reference signal based on the first transmission parameter. The network device shares and sends a transmission parameter of the second terminal device to the first terminal device, so that the first terminal device can demodulate the first reference signal, to obtain the PER of the first terminal device. It may be understood that the first terminal device serves as an "EVE" of the second terminal device, and assists in collecting statistics on a PER of the "EVE", so that accuracy of determining a bit error rate can be improved, thereby resolving a problem that accuracy of calculating the bit error rate based on model simulation or theory cannot be ensured in an actual wireless environment with a high dynamic characteristic and a scenario diversity. Based on this, in this embodiment, the first terminal device may determine the PER, and report the PER to the network device, so that the network device determines the PER of the first terminal device.

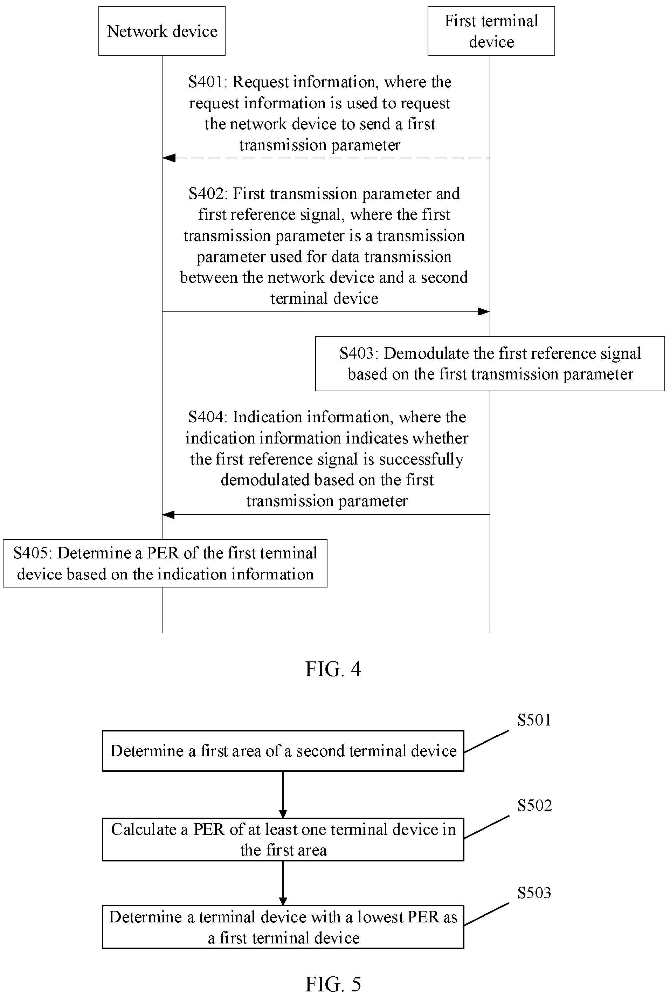

Based on FIG. 2, the following describes still another communication method provided in an embodiment of this application. It should be understood that explanations of terms in different embodiments of this application may refer to each other. To avoid redundant descriptions, a same term may not be described in different embodiments. FIG. 4 is a diagram of interaction in the still another communication method according to an embodiment of this application. As shown in FIG. 4, the communication method may include S401 to S405. S401 is an optional step.

S401: A first terminal device sends request information to a network device, where the request information is used to request the network device to send a first transmission parameter. Correspondingly, the network device receives the request information from the first terminal device.

It should be understood that step S401 corresponds to step S301. For related descriptions in step S401, refer to the descriptions in step S301. To avoid repetition, details are not described herein again.

S402: The network device sends the first transmission parameter and a first reference signal to the first terminal device, where the first transmission parameter is a transmission parameter used for data transmission between the network device and a second terminal device. Correspondingly, the first terminal device receives the first transmission parameter and the first reference signal from the network device.

S403: The first terminal device demodulates the first reference signal based on the first transmission parameter.

It should be understood that step S402 and step S403 correspond to step S201 and step S202. For related descriptions in step S402 and step S403, refer to the descriptions in step S201 and step S202. To avoid repetition, details are not described herein again.

S404: The first terminal device sends indication information to the network device, where the indication information indicates whether the first reference signal is successfully demodulated based on the first transmission parameter. Correspondingly, the network device receives the indication information from the first terminal device.

Steps S402 and S403 may be repeated until a specific threshold is reached. The first terminal device may collect statistics on a result of demodulating the first reference signal each time to determine whether the demodulation is successful, and may send, to the network device, indication information that indicates whether the first reference signal is successfully demodulated based on the first transmission parameter. It may be understood that the threshold may be configured by the network device through RRC, or may be predefined in a protocol. This is not limited in this application.

Optionally, each time after demodulating the first reference signal based on the first transmission parameter, the terminal device may report indication information of a result of this demodulation to the network device. Alternatively, the terminal device may report indication information of results of multiple demodulations to the network device at a time after the specific threshold is reached.

S405: The network device determines a PER of the first terminal device based on the indication information.

After receiving the indication information from the first terminal device, the network device may determine the PER of the first terminal device based on the indication information. For example, the network device sends the first reference signal to the first terminal device for a total of N times, receives the indication information from the first terminal device, and obtains results of N demodulations, to determine a quantity of successful demodulations. The PER of the first terminal device may be obtained based on the quantity of successful demodulations and the total quantity N. N is a positive integer greater than or equal to 1.

Optionally, after determining the PER of the first terminal device, the network device may stop sending the first reference signal to the first terminal device.

In this embodiment, the network device sends the first transmission parameter to the first terminal device. The first transmission parameter is the transmission parameter used for data transmission between the network device and the second terminal device. The first terminal device and the second terminal device are different terminal devices, and the first terminal device demodulates the first reference signal based on the first transmission parameter. The network device shares and sends a transmission parameter of the second terminal device to the first terminal device, so that the first terminal device can demodulate the first reference signal, to obtain the PER of the first terminal device. It may be understood that the first terminal device serves as an "EVE" of the second terminal device, and assists in collecting statistics on a PER of the "EVE", so that accuracy of determining a bit error rate can be improved, thereby resolving a problem that accuracy of calculating the bit error rate based on model simulation or theory cannot be ensured in an actual wireless environment with a high dynamic characteristic and a scenario diversity. Based on this, in this embodiment, after demodulating the first reference signal based on the first transmission parameter, the first terminal device can report a demodulation result to the network device, and the network device determines the PER based on the demodulation result.

Based on FIG. 2 to FIG. 4, the following describes yet another communication method provided in an embodiment of this application. It should be understood that explanations of terms in different embodiments of this application may refer to each other. To avoid redundant descriptions, a same term may not be described in different embodiments. FIG. 5 is a diagram of interaction in the yet another communication method according to an embodiment of this application. In the embodiment corresponding to FIG. 5, the method may be illustrated by using an example in which the method is performed by a network device. As shown in FIG. 5, the communication method may include S501 to S503.

S501: The network device determines a first area of a second terminal device.

The network device may determine a location of the second terminal device, and may determine the first area based on the location of the second terminal device. The first area may be a range of a specific distance from the second terminal device. For example, the first area may be a circular area with a radius of 50 m centered on the second terminal device. It may be understood that the first area may be a controlled area, and is an area that can be detected. It is assumed that there is no "EVE" in the area.

For a manner in which the network device determines the location of the second terminal device, refer to the foregoing related content. For example, the network device may determine the location of the second terminal device by using a positioning method such as DL-TDOA, UL-TDOA, DL-AoD, UL-AoA, RTT, or an E-CID. Details are not described herein again.

S502: The network device calculates a PER of at least one terminal device outside the first area.

After determining the first area, the network device may calculate the PER of the at least one terminal device outside the first area. The determining manner may be the specific implementation shown in FIG. 2. Details are not described herein again.

S503: The network device determines a terminal device with a lowest PER as a first terminal device.

After determining the PER of the at least one terminal device outside the first area, the network device may determine the terminal device with the lowest PER as the first terminal device. Optionally, a terminal device greater than a PER threshold may be determined as the first terminal device, a terminal device equal to a PER threshold may be determined as the first terminal device, or a terminal device equal to a PER threshold may be determined as the first terminal device. For another example, a terminal device with a highest PER may be determined as the first terminal device. This is not limited in this application.

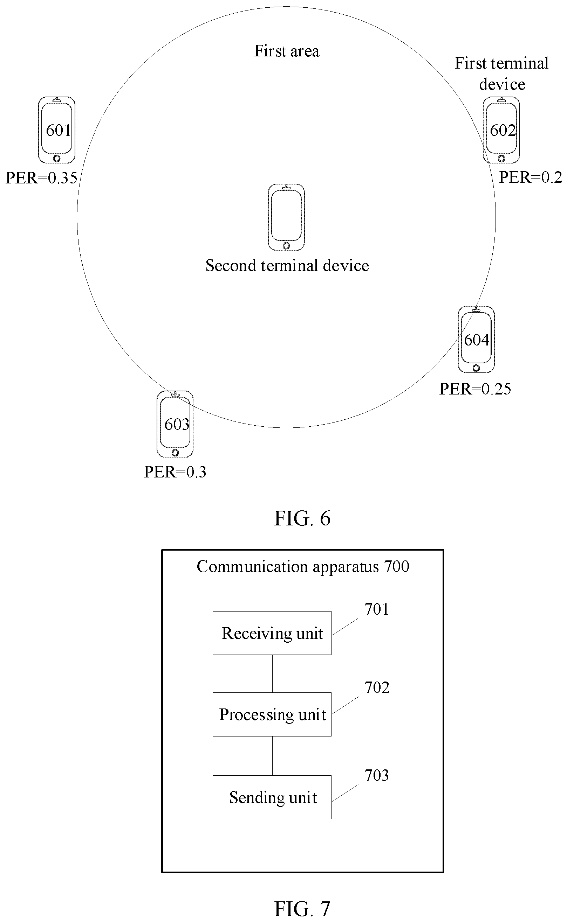

In an embodiment, FIG. 6 is a diagram of a scenario in which a network device determines a first terminal device according to an embodiment of this application. As shown in FIG. 6, the network device determines a first area based on a location of a second terminal device. There are one or more terminal devices (merely a terminal device 601, a terminal device 602, a terminal device 603, and a terminal device 604 are shown in FIG. 6) at an edge of the first area. It is assumed that a PER of the terminal device 601 is 0.35, a PER of the terminal device 602 is 0.2, a PER of the terminal device 603 is 0.3, and a PER of the terminal device 604 is 0.25. In this scenario, the network device may select the terminal device 602 with the lowest PER as the first terminal device.

It is assumed that the first terminal device is an "EVE" of the second terminal device. Therefore, it is particularly important for the network device to determine the first terminal device. According to this embodiment, the network device can determine the first terminal device. The first terminal device serves as the "EVE" of the second terminal device, and assists in collecting statistics on a PER of the "EVE", so that accuracy of determining the bit error rate can be improved, thereby resolving the problem that accuracy of calculating the bit error rate based on model simulation or theory cannot be ensured in an actual wireless environment with a high dynamic characteristic and a scenario diversity.

The foregoing describes the method embodiments provided in embodiments of this application. The following describes apparatus embodiments in embodiments of this application.

FIG. 7 is a diagram of a structure of a communication apparatus according to an embodiment of this application. The apparatus may be a first terminal device, or an apparatus (for example, a chip, a chip system, or a circuit) in a first terminal device. As shown in FIG. 7, the apparatus 700 includes at least a receiving unit 701, a processing unit 702, and a sending unit 703.

The receiving unit 701 is configured to receive a first transmission parameter and a first reference signal from a network device, where the first transmission parameter is a transmission parameter used for data transmission between the network device and a second terminal device, and the first terminal device and the second terminal device are different terminal devices; and

The processing unit 702 is configured to demodulate the first reference signal based on the first transmission parameter.

In an implementation, the communication apparatus 700 further includes:
a sending unit 703, configured to send a packet error rate PER to the network device, where the PER is determined by demodulating the first reference signal based on the first transmission parameter.

In an implementation, the communication apparatus 700 further includes:
the sending unit 703, configured to send indication information to the network device, where the indication information indicates whether the first reference signal is successfully demodulated based on the first transmission parameter.

In an implementation, the communication apparatus 700 further includes:
the sending unit 703, configured to send request information to the network device, where the request information is used to request the network device to send the first transmission parameter.

In an implementation, the first reference signal carries first transmission information, and the first transmission information is modulated based on the first transmission parameter.

For more detailed descriptions of the receiving unit 701, the processing unit 702, and the sending unit 703, directly refer to the related descriptions of the first terminal device in the method embodiments shown in FIG. 2 to FIG. 6. Details are not described herein again.

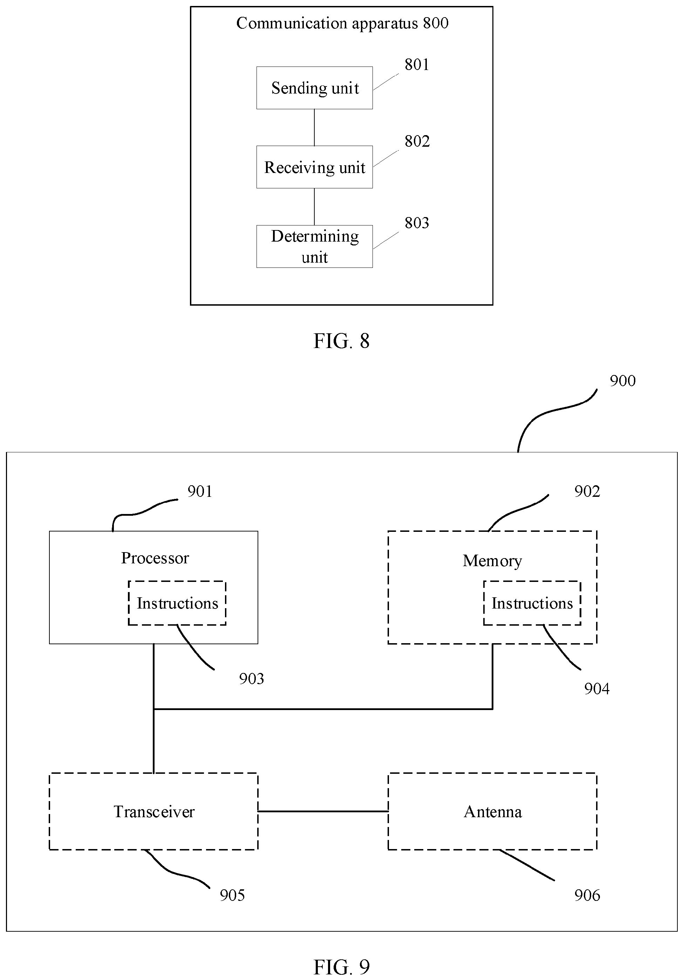

FIG. 8 is a diagram of a structure of another communication apparatus according to an embodiment of this application. The apparatus may be a network device, or an apparatus (for example, a chip, a chip system, or a circuit) in a network device. As shown in FIG. 8, the apparatus 800 includes at least a sending unit 801, a receiving unit 802, and a determining unit 803.

The sending unit 801 is configured to send a first transmission parameter and a first reference signal to a first terminal device, where the first transmission parameter is used for demodulating the first reference signal, the first transmission parameter is a transmission parameter used between the network device and a second terminal device, and the first terminal device and the second terminal device are different terminal devices.

In an implementation, the communication apparatus 800 further includes:
a receiving unit 802, configured to receive a packet error rate PER from the first terminal device, where the PER is determined by the first terminal device by demodulating the first reference signal based on the first transmission parameter.

In an implementation, the communication apparatus 800 further includes:
a receiving unit 802, configured to receive indication information from the first terminal device, where the indication information indicates whether the first terminal device successfully demodulates the first reference signal based on the first transmission parameter; and
a determining unit 803, configured to determine a PER of the first terminal device based on the indication information.

In an implementation, the communication apparatus 800 further includes:
a determining unit 803, configured to determine a first area of the second terminal device, where the first terminal device is a terminal device with a lowest PER outside the first area.

In an implementation, the communication apparatus 800 further includes:
a receiving unit 802, configured to receive request information from the first terminal device, where the request information is used to request the network device to send the first transmission parameter.

In an implementation, the first reference signal carries first transmission information, and the first transmission information is modulated based on the first transmission parameter.

For more detailed descriptions of the sending unit 801, the receiving unit 802, and the determining unit 803, directly refer to the related descriptions of the network device in the method embodiments shown in FIG. 2 to FIG. 6. Details are not described herein again.

Based on the foregoing network architecture, FIG. 9 is a diagram of a structure of still another communication apparatus according to an embodiment of this application. As shown in FIG. 9, the apparatus 900 may include one or more processors 901. The processor 901 may also be referred to as a processing unit, and may implement a specific control function. The processor 901 may be a general-purpose processor, a dedicated processor, or the like. For example, the processor 901 may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU); execute a software program; and process data of the software program.

In an optional design, the processor 901 may also store instructions and/or data 903, and the instructions and/or data 903 may be run by the processor, so that the apparatus 900 performs the method described in the foregoing method embodiments.

In another optional design, the processor 901 may include a transceiver unit configured to implement a receiving function and a sending function. For example, the transceiver unit may be a transceiver circuit, an interface, an interface circuit, or a communication interface. The transceiver circuit, the interface, or the interface circuit configured to implement the receiving function and the sending function may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 900 may include a circuit. The circuit may implement a sending function, a receiving function, or a communication function in the foregoing method embodiments.

Optionally, the apparatus 900 may include one or more memories 902 that may store instructions 904, and the instructions may be run on the processor, so that the apparatus 900 is enabled to perform the methods described in the foregoing method embodiments. Optionally, the memory may further store data. Optionally, the processor may also store instructions and/or data. The processor and the memory may be separately disposed, or may be integrated together. For example, the correspondence described in the foregoing method embodiments may be stored in the memory or stored in the processor.

Optionally, the apparatus 900 may further include a transceiver 905 and/or an antenna 906. The processor 901 may be referred to as a processing unit, and controls the apparatus 900. The transceiver 905 may be referred to as a transceiver unit, a transceiver machine, a transceiver circuit, a transceiver apparatus, a transceiver module, or the like, and is configured to implement a receiving function and a sending function.

Optionally, the apparatus 900 in this embodiment of this application may be configured to perform the methods described in FIG. 2 to FIG. 6 in embodiments of this application.

In an embodiment, the communication apparatus 900 may be a first terminal device or an apparatus (for example, a chip, a chip system, or a circuit) in a first terminal device. When computer program instructions stored in the memory 902 are executed, the processor 901 is configured to control the processing unit 702 to perform the operations performed in the foregoing embodiment. The transceiver 905 is configured to perform the operations performed by the receiving unit 701 and the sending unit 703 in the foregoing embodiment. The transceiver 905 is further configured to send information to a communication apparatus other than the communication apparatus. The first terminal device or the apparatus in the first terminal device may be further configured to perform various methods performed by the first terminal device in the method embodiments in FIG. 2 to FIG. 6. Details are not described herein again.

In an embodiment, the communication apparatus 900 may be a network device or an apparatus (for example, a chip, a chip system, or a circuit) in a network device. When the computer program instructions stored in the memory 902 are executed, the processor 901 is configured to control the determining unit 803 to perform the operations performed in the foregoing embodiment. The transceiver 905 is configured to receive information from a communication apparatus other than the communication apparatus. The transceiver 905 is further configured to perform the operations performed by the sending unit 801 and the receiving unit 802 in the foregoing embodiment. The network device or the apparatus in the network device may be further configured to perform various methods performed by the network device in the method embodiments in FIG. 2 to FIG. 6. Details are not described herein again.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiments may be a network device or a terminal device. However, the scope of the apparatus described in this application is not limited thereto, and a structure of the apparatus may not be limited by that in FIG. 9. The apparatus may be an independent device, or may be a part of a larger device. For example, the apparatus may be:
(1) an independent integrated circuit IC, a chip, or a chip system or subsystem;
(2) a set including one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

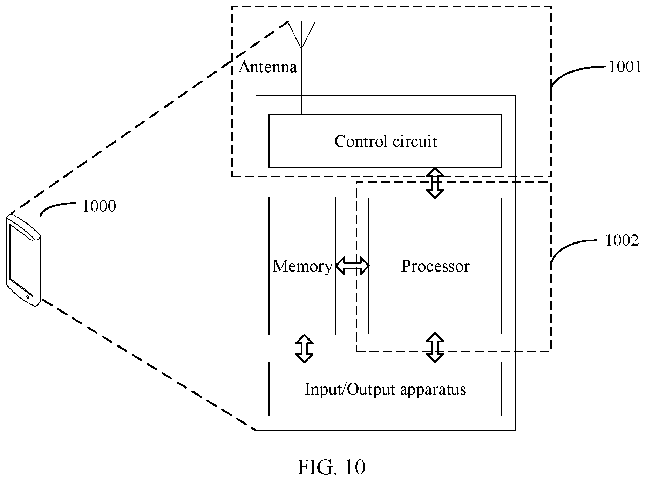

FIG. 10 is a diagram of a structure of a terminal device according to an embodiment of this application. For ease of description, FIG. 10 shows only main components of the terminal device. As shown in FIG. 10, the terminal device 1000 includes a processor, a memory, a control circuit, an antenna, and an input/output apparatus. The processor is mainly configured to: process a communication protocol and communication data, control the entire terminal device, execute a software program, and process data of the software program. The memory is mainly configured to store the software program and data. The radio frequency circuit is mainly configured to: perform conversion between a baseband signal and a radio frequency signal; and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read a software program in a storage unit, parse and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal device, the radio frequency circuit receives the radio frequency signal through the antenna. The radio frequency signal is further converted into a baseband signal, and the baseband signal is output to the processor. The processor converts the baseband signal into data, and processes the data.

For ease of description, only one memory and one processor are shown in FIG. 10. In an actual terminal device, there may be a plurality of processors and memories. The memory may also be referred to as a storage medium, a storage device, or the like. This is not limited in embodiments of the present invention.

In an optional implementation, the processor may include a baseband processor and a central processing unit. The baseband processor is mainly configured to process the communication protocol and the communication data. The central processing unit is mainly configured to control the entire terminal device, execute a software program, and process the data of the software program. The processor in FIG. 10 integrates functions of the baseband processor and the central processing unit. A person skilled in the art may understand that the baseband processor and the central processing unit may alternatively be processors independent of each other, and are connected to each other by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a receiving function and a sending function may be considered as a transceiver unit 1001 of the terminal device 1000, and the processor that have a processing function may be considered as a processing unit 1002 of the terminal device 1000. As shown in FIG. 10, the terminal device 1000 includes the transceiver unit 1001 and the processing unit 1002. The transceiver unit may also be referred to as a transceiver, a transceiver machine, a transceiver apparatus, or the like. Optionally, a component that is in the transceiver unit 1001 and that is configured to implement a receiving function may be considered as a receiving unit, and a component that is in the transceiver unit 1001 and that is configured to implement a sending function may be considered as a sending unit. In other words, the transceiver unit 1001 includes the receiving unit and the sending unit. For example, the receiving unit may also be referred to as a receiver, a receiver machine, a receiving circuit, or the like, and the sending unit may be referred to as a transmitter, a transmitter machine, a transmitting circuit, or the like. Optionally, the receiving unit and the sending unit may be one integrated unit, or may be a plurality of independent units. The receiving unit and the sending unit may be in one geographical position, or may be distributed in a plurality of geographical positions.

In an embodiment, the processing unit 1002 is configured to perform the operations performed by the processing unit 702 in the foregoing embodiment, and the transceiver unit 1001 is configured to perform the operations performed by the receiving unit 701 and the sending unit 703 in the foregoing embodiment. The terminal device 1000 may be further configured to perform various methods performed by the first terminal device in the method embodiments in FIG. 2 to FIG. 6. Details are not described herein again.

An embodiment of this application further provides a computer-readable storage medium. The computer-readable storage medium stores a computer program. When the program is executed by a processor, a procedure related to the first terminal device in the communication method provided in the foregoing method embodiments may be implemented.

An embodiment of this application further provides a computer-readable storage medium. The computer-readable storage medium stores a computer program. When the program is executed by a processor, a procedure related to the network device in the communication method provided in the foregoing method embodiments may be implemented.

An embodiment of this application further provides a computer program product. When the computer program product runs on a computer or a processor, the computer or the processor is enabled to perform one or more steps in any one of the foregoing communication methods. When each of component modules in the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line. The at least one processor is configured to run a computer program or instructions to perform some or all steps recorded in the method embodiments corresponding to FIG. 2 to FIG. 6. The chip system may include a chip, or may include a chip and another discrete device.

An embodiment of this application further discloses a communication system. The system includes a first terminal device, a second terminal device, and a network device. For specific descriptions, refer to the communication methods shown in FIG. 2 to FIG. 6.

It should be understood that the memory mentioned in embodiments of this application may be a volatile memory or a nonvolatile memory, or may include both a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example description but not a limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). The memory is any other medium that can be used to carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The steps of the methods in embodiments of this application may be sequentially adjusted, combined, or deleted based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A communication method, applied to a first terminal device, wherein the method comprises:
receiving a first transmission parameter and a first reference signal from a network device, wherein the first transmission parameter is a transmission parameter used for data transmission between the network device and a second terminal device, and the first terminal device and the second terminal device are different terminal devices; and
demodulating the first reference signal based on the first transmission parameter.

2. The method according to claim 1, wherein the method further comprises:
sending a packet error rate PER to the network device, wherein the PER is determined by demodulating the first reference signal based on the first transmission parameter.

3. The method according to claim 1, wherein the method further comprises:
sending indication information to the network device, wherein the indication information indicates whether the first reference signal is successfully demodulated based on the first transmission parameter.

4. The method according to any one of claims 1 to 3, wherein the method further comprises:
sending request information to the network device, wherein the request information is used to request the network device to send the first transmission parameter.

5. The method according to any one of claims 1 to 4, wherein the first reference signal carries first transmission information, and the first transmission information is modulated based on the first transmission parameter.

6. A communication method, applied to a network device, wherein the method comprises:
sending a first transmission parameter and a first reference signal to a first terminal device, wherein the first transmission parameter is used for demodulating the first reference signal, the first transmission parameter is a transmission parameter used between the network device and a second terminal device, and the first terminal device and the second terminal device are different terminal devices.

7. The method according to claim 6, wherein the method further comprises:
receiving a packet error rate PER from the first terminal device, wherein the PER is determined by the first terminal device by demodulating the first reference signal based on the first transmission parameter.

8. The method according to claim 6, wherein the method further comprises:
receiving indication information from the first terminal device, wherein the indication information indicates whether the first terminal device successfully demodulates the first reference signal based on the first transmission parameter; and
determining a PER of the first terminal device based on the indication information.

9. The method according to any one of claims 6 to 8, wherein the method further comprises:
determining a first area of the second terminal device, wherein the first terminal device is a terminal device with a lowest PER outside the first area.

10. The method according to any one of claims 6 to 9, wherein the method further comprises:
receiving request information from the first terminal device, wherein the request information is used to request the network device to send the first transmission parameter.

11. The method according to any one of claims 6 to 10, wherein the first reference signal carries first transmission information, and the first transmission information is modulated based on the first transmission parameter.

12. A communication method, comprising the method according to any one of claims 1 to 5 and the method according to any one of claims 6 to 11.

13. A communication apparatus, comprising:
a receiving unit, configured to receive a first transmission parameter and a first reference signal from a network device, wherein the first transmission parameter is a transmission parameter used for data transmission between the network device and a second terminal device, and the first terminal device and the second terminal device are different terminal devices; and
a processing unit, configured to demodulate the first reference signal based on the first transmission parameter.

14. The apparatus according to claim 13, wherein the communication apparatus further comprises:
a sending unit, configured to send a packet error rate PER to the network device, wherein the PER is determined by demodulating the first reference signal based on the first transmission parameter.

15. The apparatus according to claim 13, wherein the communication apparatus further comprises:
a sending unit, configured to send indication information to the network device, wherein the indication information indicates whether the first reference signal is successfully demodulated based on the first transmission parameter.

16. The apparatus according to any one of claims 13 to 15, wherein the communication apparatus further comprises:
the sending unit, configured to send request information to the network device, wherein the request information is used to request the network device to send the first transmission parameter.

17. The apparatus according to any one of claims 13 to 16, wherein the first reference signal carries first transmission information, and the first transmission information is modulated based on the first transmission parameter.

18. A communication apparatus, comprising:
a sending unit, configured to send a first transmission parameter and a first reference signal to a first terminal device, wherein the first transmission parameter is used for demodulating the first reference signal, the first transmission parameter is a transmission parameter used between the network device and a second terminal device, and the first terminal device and the second terminal device are different terminal devices.

19. The apparatus according to claim 18, wherein the communication apparatus further comprises:
a receiving unit, configured to receive a packet error rate PER from the first terminal device, wherein the PER is determined by the first terminal device by demodulating the first reference signal based on the first transmission parameter.

20. The apparatus according to claim 18, wherein the communication apparatus further comprises:
a receiving unit, configured to receive indication information from the first terminal device, wherein the indication information indicates whether the first terminal device successfully demodulates the first reference signal based on the first transmission parameter; and
a determining unit, configured to determine a PER of the first terminal device based on the indication information.

21. The apparatus according to any one of claims 18 to 20, wherein the communication apparatus further comprises:
the determining unit, configured to determine a first area of the second terminal device, wherein the first terminal device is a terminal device with a lowest PER outside the first area.

22. The apparatus according to any one of claims 18 to 21, wherein the communication apparatus further comprises:
the receiving unit, configured to receive request information from the first terminal device, wherein the request information is used to request the network device to send the first transmission parameter.

23. The apparatus according to any one of claims 18 to 22, wherein the first reference signal carries first transmission information, and the first transmission information is modulated based on the first transmission parameter.

24. A communication apparatus, comprising a processor, a memory, an input interface, and an output interface, wherein the input interface is configured to receive information from a communication apparatus other than the communication apparatus, the output interface is configured to output information to a communication apparatus other than the communication apparatus, and when a stored computer program stored in the memory is invoked by the processor, the method according to any one of claims 1 to 5 is implemented, or the method according to any one of claims 6 to 11 is implemented.

25. A computer-readable storage medium, wherein the computer-readable storage medium stores a computer program or computer instructions, and when the computer program or the computer instructions are executed by a processor, a first terminal device is supported in implementing the method according to any one of claims 1 to 5, or a network device is supported in implementing the method according to any one of claims 6 to 11.

26. A computer program product comprising program instructions, wherein when the program instructions are run on a computer, the method according to any one of claims 1 to 5 is implemented, or the method according to any one of claims 6 to 11 is implemented.

27. A chip system, comprising at least one processor, a memory, and an interface circuit, wherein the memory, the interface circuit, and the at least one processor are interconnected through a line, the at least one memory stores instructions, and when the instructions are executed by the processor, a first terminal device is supported in implementing the method according to any one of claims 1 to 5, or a network device is supported in implementing the method according to any one of claims 6 to 11.

28. A communication system, comprising a first terminal device, a second terminal device, and a network device, wherein the first terminal device is configured to perform the method according to any one of claims 1 to 5, or is configured to perform the method according to any one of claims 6 to 11.
